# FASCICULE DE BREVET EUROPEEN

(11) **EP 1 524 809 B1**
(45) Date de publication et mention de la délivrance du brevet: **26.03.2008**
(21) Numéro de dépôt: 04292203.9
(22) Date de dépôt: 14.09.2004
(51) Int. Cl.: H04L 12/56, H04H 9/00

(54) **Procédé et système pour déterminer les membres d'une audience en utilisant Bluetooth**
Verfahren und System zur Zuschauerfassung mit Bluetooth
Method and system for determining audience members by using Bluetooth

(30) Priorité: 16.10.2003 FR 0312114
(43) Date de publication de la demande: 20.04.2005
(73) Titulaire: Societé Française du Radiotéléphone, 75008 Paris (FR)
(72) Inventeur: Faisy, Christian, 97400 St Denis de la Reunion (FR)
(74) Mandataire: Debay, Yves

(56) Documents cités:
- EP-A- 1 133 090
- US-A- 4 930 011
- US-A1- 2003 126 593
- US-B1- 6 467 089

## Description

La présente invention se rapporte au domaine des télécommunications appliqué à l'acquisition d'informations de grande précision. L'invention concerne plus particulièrement un procédé d'acquisition de données par un récepteur utilisant une technologie de type Bluetooth, ainsi qu'un équipement gestionnaire d'informations pour mettre en oeuvre ce procédé.

Il est connu dans l'art antérieur, pour détecter et identifier des consommateurs de produits, par exemple télévisuels, l'utilisation de boutons poussoirs sur un appareil, chaque bouton étant dédié exclusivement à un consommateur. Lorsqu'un tel bouton est enfoncé, il est considéré que le consommateur associé à ce bouton "consomme" le produit, en l'occurrence un programme télévisuel. Un inconvénient de cette méthode est qu'elle ne permet pas de vérifier la présence réelle du consommateur. De plus, pour un groupe de consommateurs, la manipulation de l'appareil à boutons poussoirs nécessite une pluralité de déplacements. Les informations de détection et d'identification de consommateurs peuvent donc être erronées. Le mode déclaratif utilisé pour détecter les individus est très imprécis, de sorte que ni l'accès au produit ni l'identification de l'individu ayant accédé au produit ne sont véritablement contrôlés de manière fiable.

Le document EP 1 133 090 A2, publié le 12.09.2001 décrit un procédé permettant d'identifier une audience autour d'une télévision. Les utilisateurs portent un appareil sans fil qui est détectable autour de la télévision. A intervalles réguliers, un signal est émis à destination de ces appareils sans fils afin de les identifier. L'identité des utilisateurs présents autour de la télévision est déterminée, et stockée avec le programme regardé par les utilisateurs. Le programme est déterminé en déterminant un code émis avec le programme. L'enregistrement des programmes suivis se fait indépendamment des actions des utilisateurs, le changement de type d'utilisation déclenché par l'utilisateur ne déclenchant pas nécessairement l'enregistrement d'un type d'utilisation.

Il existe donc un besoin de rendre plus représentatives de la réalité les informations de détection/identification.

La présente invention a donc pour objet de supprimer un ou plusieurs des inconvénients de l'art antérieur en définissant un procédé permettant d'identifier à la fois des individus et une activité réalisée par ces individus de manière fiable par une technologie de type Bluetooth.

La présente invention a également pour objet de permettre de collecter des données dans lesquelles des informations de temps et durée sont associées aux informations de présence d'un individu.

A cet effet, l'invention concerne un procédé d'acquisition de données par un récepteur radio utilisant la technologie Bluetooth, mis en oeuvre par un équipement gestionnaire d'informations comprenant des premiers moyens d'acquisition de données dotés d'un module radio Bluetooth incluant ledit récepteur pour recevoir des données d'au moins un terminal sans fil Bluetooth dans une zone déterminée dite cellule de réception, ledit procédé comprenant une étape préalable de déclaration dudit terminal au module radio Bluetooth et COMPRENANT LES CARACTERISTIQUES TELLES QUE DÉCRITES DANS LA REVENDICATION.

L'invention apporte ainsi une grande précision de "mesure" puisqu'elle permet d'identifier de façon passive un ou plusieurs utilisateurs porteurs d'un terminal autonome Bluetooth accédant à un produit ainsi que la façon dont est utilisé ce produit.

Selon une autre particularité de l'invention, l'étendue de la zone déterminée est de l'ordre de 10 mètres, le module radio Bluetooth étant fixe et de classe 3 avec une puissance d'émission de l'ordre de 0 décibel.

Selon une autre particularité, l'étape de déclaration comprend la saisie d'un code d'identification du terminal à l'aide d'une interface graphique et de moyens de navigation reliés à l'équipement gestionnaire d'informations, l'étape de détection/attachement étant visualisable par des moyens d'indication de détection du terminal.

Selon une autre particularité, une étape de mise à jour est réalisée lors d'une modification du type d'utilisation du produit, par l'intermédiaire d'un module de suivi des seconds moyens d'acquisition, pour mettre à jour les séquences d'attachement/détachement en cours.

Selon une autre particularité, chaque terminal est destiné à un utilisateur unique ayant saisi un code d'identification personnel lors de l'étape de déclaration, des données associées au terminal pour représenter des informations caractérisant cet utilisateur unique étant stockées dans une deuxième base de données du centre serveur.

Selon une autre particularité, les données à transmettre vers la première base de données sont compressées puis codées par des moyens de transformation de données couplés au module d'envoi, pour être envoyées par le module d'envoi vers la première base de données via un réseau de communication public.

L'acquisition des données recueillies se traduisant par l'envoi desdites données sur un réseau public, cette opération peut être gérée de manière prédéclarée et autonome par le module d'envoi, par exemple envoi toutes les nuits à 00h01 s'il existe des données.

Selon une autre particularité, la mémoire des premiers moyens d'acquisition de données, en cas de succès de réception par la première base de données du centre serveur, est déchargée par des moyens d'effacement de données du module d'envoi, ce dernier réitérant l'étape de transmission dans le cas contraire.

Il est bon de noter ici que la sollicitation peut être externe : appel vers le module avec commandes "AT", c'est-à-dire des commandes débutant avec le signal "Attention", déclenchant le vidage de la mémoire. La connexion est alors réalisée par le serveur et non à l'initiative du module comprenant les moyens d'effacement.

Selon une autre particularité, la mémoire des seconds moyens d'acquisition de données est également déchargée par lesdits moyens d'effacement de données en cas de succès de réception par la première base de données du centre serveur.

Selon une autre particularité, le réseau de communication public à travers lequel les données codées compressées sont transmises est le réseau Internet ou un réseau de type GSM.

Selon une autre particularité, le produit est télévisuel, le type d'utilisation étant représentatif d'une programmation dudit produit.

L'invention a également pour objet de proposer un équipement gestionnaire d'informations utilisant une technologie de type Bluetooth pour supprimer les inconvénients de l'art antérieur.

A cet effet, l'invention concerne un équipement gestionnaire d'informations utilisant une technologie de type Bluetooth pour la mise en oeuvre du procédé selon l'invention, comprenant des premiers moyens d'acquisition de données dotés d'un module radio Bluetooth incluant ledit récepteur pour recevoir des données d'au moins un terminal sans fil Bluetooth dans une zone déterminée dite cellule de réception, ainsi qu'une interface utilisateur pour déclarer ledit terminal au module radio Bluetooth avec au moins une caractéristique d'identification du terminal, L'EQUIPEMENT COMPORTANT LES CARACTERISTIQUES TELLES QUE DÉCRITES DANS LA REVENDICATION 11.

Selon une autre particularité, le module radio Bluetooth est de classe 3 et comprend une antenne à gain directive avec une puissance d'émission de l'ordre de 0 décibel.

Selon une autre particularité de l'invention, l'interface utilisateur comprend une interface graphique et des moyens de navigation pour permettre la saisie d'un code d'identification du terminal.

Selon une autre particularité, l'interface de renseignement est reliée à un module de suivi des seconds moyens d'acquisition apte à réaliser la mise à jour des séquences d'attachement/détachement en cours en fonction du type d'utilisation du produit.

Selon une autre particularité, le module d'envoi de données est couplé à des moyens de transformation de données permettant de compresser et coder les données à transmettre, ledit module d'envoi comprenant une interface de communication avec un réseau de communication public.

Selon une autre particularité, le module d'envoi comporte des moyens d'effacement de données pour décharger la mémoire des premiers et/ou seconds moyens d'acquisition de données et des moyens de réception pour vérifier la bonne réception de données par la base de données distante.

Selon une autre particularité, l'interface de communication du module d'envoi est un terminal Internet ou de type GSM.

L'invention, avec ses caractéristiques et avantages, ressortira plus clairement à la lecture de la description faite en référence aux dessins annexés donnés à titre d'exemples non limitatifs dans lesquels :
- la figure 1 représente de manière schématique un mode de réalisation d'un équipement gestionnaire d'information selon l'invention en liaison avec un réseau de type GSM,
- la figure 2 représente une cellule de réception dans laquelle des terminaux mobiles Bluetooth peuvent communiquer avec un module radio Bluetooth fixe,
- la figure 3 représente schématiquement un exemple de processus suivant l'invention.

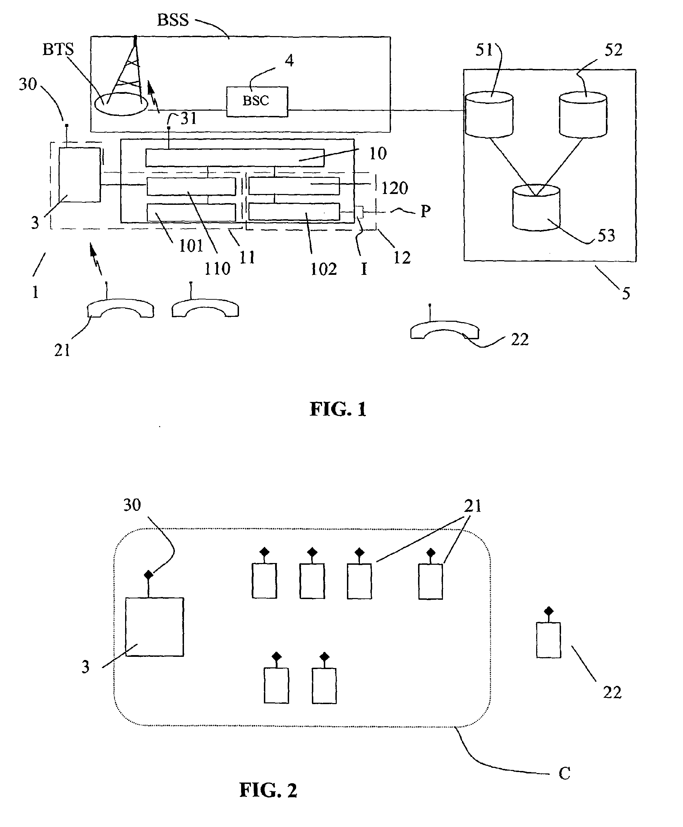

L'invention va être à présent décrite en référence aux figures 1 et 2.

Comme illustré à la figure 1, l'invention propose d'identifier des personnes par l'intermédiaire de terminaux (21, 22) autonomes Bluetooth préalablement déclarés auprès d'un module radio Bluetooth (3) communiquant avec les terminaux (21, 22), par exemple grâce à la technologie Bluetooth de classe 3 correspondant à une émission de 1mW. De manière non limitative, l'antenne (30) du module radio (3) est une antenne à gain directive générant -6 à 0 décibel, de sorte que les terminaux doivent être très proches du module radio pour communiquer, par exemple à 10 mètres tout au plus. Conformément à la spécification V1.1 du standard Bluetooth, la cellule de réception (C) correspondant au module radio Bluetooth (3) permet de faire communiquer au maximum 7 terminaux sans fil (21, 22) "esclaves" simultanément avec le module radio (3) "maître", comme représenté à la figure 2. Les terminaux Bluetooth (21, 22) peuvent se présenter sous forme de bracelet ou toute autre forme pratique à porter.

L'équipement (1) gestionnaire d'informations utilisant la technologie Bluetooth selon l'invention a pour spécificité d'être placé à proximité directe d'un produit (P), par exemple un receveur de programmes diffusés tel qu'un téléviseur, et d'utiliser la technologie Bluetooth pour stocker des informations d'attachement/détachement au module (3) "maître" pour les personnes équipées d'un terminal, de façon à lier ces informations aux programmes associés regardés et/ou écoutés dans le cas de cet exemple particulier. Le produit (P) est disposé dans la cellule (C) et n'est par exemple accessible que pour des utilisateurs situés dans la cellule (C).

L'acquisition de données s'effectue donc par exemple par télédéclenchement du récepteur radio du module radio Bluetooth, initié par simple détection/attachement d'un terminal Bluetooth déclaré pénétrant dans une zone déterminée correspondant à la cellule de réception (C), dont l'étendue est de l'ordre de 10 mètres. Une interface utilisateur est prévue pour déclarer un terminal (21, 22) au module radio Bluetooth (3) avec au moins une caractéristique d'identification du terminal (21, 22). L'équipement (1) comprend par exemple une interface utilisateur (non représentée) constituée d'une interface graphique et de moyens de navigation pour permettre la saisie d'un code d'identification du terminal (21, 22). Dans un mode de réalisation de l'invention, l'utilisateur peut déclarer son terminal au module radio Bluetooth (3) en utilisant par exemple l'afficheur d'un téléviseur ou tout autre afficheur couplé à l'équipement (1). Les informations demandées seront le code PIN à 4 chiffres du terminal (21, 22), puis une validation du terminal écouté, qui dispose par exemple d'une diode relayant visuellement par un clignotement long l'information de détection «plein champ» radioélectrique du récepteur. Il est ainsi possible de visualiser une bonne réception. Un signalement par clignotement rapide peut permettre d'indiquer le besoin de changement des piles ou batteries. L'étape de détection/attachement est donc visualisable par de tels moyens d'indication de détection du terminal (21, 22).

Comme représenté à la figure 2, un terminal (22) situé en dehors de la cellule (C), même s'il a été déclaré, n'est pas détecté et n'est donc pas pris en compte par l'équipement (1). On comprend ici que la communication Bluetooth visée ici n'a absolument pas besoin de capacités de rayonnement accrues puisque seuls les terminaux (21) très proches du module radio (3) doivent être détectés. Une puissance de classe 1, allant généralement jusqu'à 100 mètres depuis une base mobile, n'est donc pas avantageuse selon le principe de l'invention.

L'équipement (1) selon l'invention comprend des premiers moyens d'acquisition (11) de données incluant le module radio Bluetooth (3) et une mémoire (101) destinée à stocker des données représentatives de séquences d'attachement/détachement de terminaux (21, 22) déclarés. L'équipement (1) comprend également des seconds moyens d'acquisition (12) de données pourvus d'une interface (I) de renseignement et d'une mémoire (102) pour stocker des données horodatées représentatives d'un type d'utilisation du produit (P). Des moyens d'horloge (non représentés) peuvent être prévus pour permettre d'horodater ces données. Dans le cas d'un produit télévisuel, le type d'utilisation est représentatif d'une programmation du produit télévisuel. L'invention présente alors différents avantages : elle permet notamment l'identification sécurisée et passive d'un cercle de famille face à un récepteur de programmes. Le mode non déclaratif de cette identification, associé à la détection automatique de la présence des spectateurs puis la corrélation de cette information avec le programme vu, est un élément capable d'apporter une plus grande précision dans les mesures médiamétriques. D'autres applications de contrôle d'accès ou de domotique associant la reconnaissance d'un individu porteur du terminal (21, 22) par attachement du profil détecté sont possibles : vocalisation de messages reçus, affichage d'un programme TV ou écoute d'une station radio préférée, ouverture de volets roulants, etc.

Comme illustré à la figure 1, les premiers moyens d'acquisition (11) de données comportent un module (110) de recueil et classement relié au module radio Bluetooth (3). Ce module de recueil et classement est apte d'une part à identifier un terminal (21) déclaré venant d'être détecté par le module radio Bluetooth (3) pour créer automatiquement une séquence d'attachement/détachement associée à la caractéristique d'identification du terminal (21), et d'autre part à identifier la fin de détection de ce terminal (21) pour mémoriser ladite séquence dans la mémoire (101) des premiers moyens d'acquisition (11) de données. Cette mémoire (101) peut être de type RAM (Random Access Memory), Flash ou équivalent. Des moyens de mémorisation communs peuvent regrouper cette mémoire (101) et la mémoire (102) des seconds moyens d'acquisition (12) de données dans une variante de réalisation.

L'équipement gestionnaire d'informations (1) comporte un module d'envoi (10) de données pour collecter les données obtenues par les premiers et seconds moyens d'acquisition (11, 12) de données et transmettre vers une base de données (51) distante des données représentatives d'un historique répertoriant pour chaque terminal (21, 22) déclaré les séquences horodatées d'attachement/détachement complétées avec le type d'utilisation correspondant du produit (P) accessible dans la cellule (C). Comme illustré à la figure 1, le module d'envoi (10) comprend une interface de communication avec un réseau de communication public, par exemple un terminal Internet, GSM data ou GSM SMS (Short Message Service). Le sous-système radio (BSS) ou le réseau RTCP (Réseau Téléphonique Commuté Public) permettent d'acheminer les données vers la base de données (51). Une antenne (31) de type GSM du module d'envoi (10) permet, dans l'exemple de la figure 1, de transmettre les données vers les récepteurs de la station de base (BTS), le contrôleur BSC de station de base (4) contrôlant le transfert de ces données. Dans un mode de réalisation de l'invention, le module d'envoi (10) est couplé à des moyens de transformation de données permettant de compresser et coder les données à transmettre. La transmission peut s'effectuer de "manière nocturne" selon un protocole sécurisé à un centre serveur (5) authentifiant l'intégrité des messages délivrés, qui sont stockés codés dans la base de données (51) à des fins de statistiques par exemple. L'envoi des données s'effectuant sur un réseau public, cette opération peut être gérée de manière prédéclarée et autonome par le module d'envoi (10), par exemple envoi toutes les nuits après minuit s'il y a effectivement des données à transmettre. En variante, un décodage et une décompression des données transmises peuvent être réalisés par le centre serveur (5).

Dans un mode de réalisation de l'invention, le module d'envoi (10) est en charge de la gestion de l'effacement de la mémoire (101) des premiers moyens d'acquisition (11)de données, en cas de succès de réception par la base de données (51) du centre serveur (5). Cette mémoire (101) est déchargée par des moyens d'effacement de données (non représentés) du module d'envoi (10) qui peuvent être également commandés à l'initiative du centre serveur (5). Des commandes AT pour modem peuvent être utilisées dans le cas d'une telle sollicitation externe avec appel vers le module d'envoi (10). L'étape de transmission des données est réitérée par le module d'envoi (10) dans le cas où la réception a échoué. La base de données (51) distante délivre par exemple un code interprété par des moyens de réception du module d'envoi (10) pour vérifier la bonne réception de données par la base de données (51) distante, le code délivré permettant d'indiquer le succès ou l'échec de la réception. Le module d'envoi (10) gère des schémas de ré-essai d'envoi si nécessaire ainsi que la transmission des remontées de messages d'erreur ou de périodes de maintenance atteintes délivrées par une application locale de l'équipement (1).

Le module d'envoi (10) peut également décharger de manière analogue la mémoire (102) des seconds moyens d'acquisition (12) de données, par l'intermédiaire des moyens d'effacement de données. Le déchargement des mémoires (101, 102) peut avantageusement et de manière non limitative être réalisé lorsque l'inscription de données ne peut plus se faire en raison d'une insuffisance de mémoire libre, une marge de sécurité pour la mémoire devant être atteinte.

Dans un mode de réalisation de l'invention, chaque terminal Bluetooth (21, 22) est destiné à un utilisateur unique ayant saisi un code d'identification personnel lors de la déclaration de ce terminal (21, 22). Des données associées au terminal (21, 22) pour représenter des informations caractérisant cet utilisateur unique sont stockées dans une base de données (52) supplémentaire du centre serveur (5). L'opérateur du réseau acheminant les données vers la première base de données (51) déclare en effet au préalable, pour chaque terminal (21, 22), les informations personnelles relatives à son utilisateur, comme par exemple l'âge, le sexe, le nom, le prénom, la catégorie socioprofessionnelle, etc. Ces informations personnelles sont stockées sur une base de données (52) distincte de la base de données (51) contenant les informations d'attachement/détachement afin de répondre aux exigences des personnes sur la protection de leur vie privée.

Une étape de mise à jour peut être réalisée lors d'une modification du type d'utilisation du produit (P), par l'intermédiaire d'un module de suivi (120) des seconds moyens d'acquisition (12) de données, pour mettre à jour les séquences d'attachement/détachement en cours concernant les terminaux (21) présents dans la cellule (C) de réception. L'interface (1) de renseignement est reliée à ce module de suivi pour signaler les changements d'utilisation du produit (P), de façon que le module de suivi réalise une mise à jour tenant compte du nouveau type d'utilisation du produit (P).

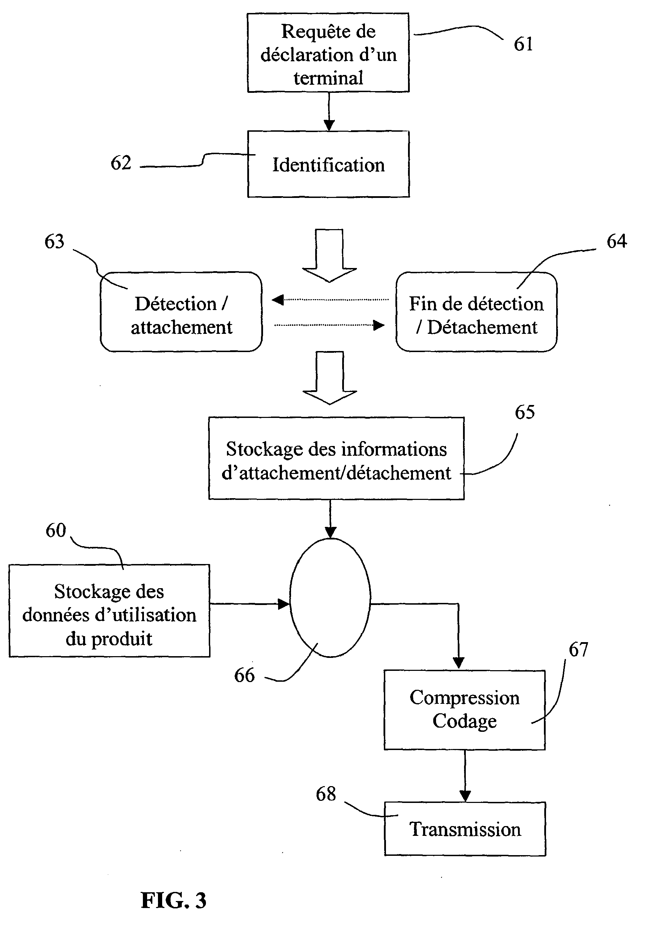

L'invention va être à présent décrite en liaison avec les figures 1 et 3.

Le procédé d'acquisition de données comprend, comme représenté à la figure 3, une étape préalable de déclaration, par un utilisateur, d'un terminal (21, 22) au module radio Bluetooth (3). Cet utilisateur effectue par exemple une requête (61) de déclaration à l'aide de l'interface utilisateur. Une phase d'identification (62) est réalisée par saisie au moins d'un code PIN ou caractéristique d'identification équivalente. La déclaration peut être naturellement réalisée par une même personne pour déclarer une pluralité de terminaux (21, 22) Bluetooth.

A un moment variable du processus, lorsqu'un utilisateur vient avec son terminal (21) déclaré dans la cellule (C) de réception, une étape (63) de détection/attachement de ce terminal (21) est réalisée par le module radio Bluetooth (3). Une étape consécutive de création d'une séquence d'attachement/détachement associée à la caractéristique d'identification dudit terminal (21) est effectuée par le module (110) de recueil et classement. De la même façon, à un moment variable du processus, une étape (64) de fin de détection/détachement d'un terminal (22) déclaré ayant quitté la cellule (C) de réception est réalisée par le module radio Bluetooth (3). Une étape consécutive (65) de mémorisation de la séquence d'attachement/détachement associée à la caractéristique d'identification dudit terminal (22) est effectuée par le module (110) de recueil et classement, dans la mémoire (101) des premiers moyens d'acquisition (11) de données.

Comme représenté à la figure 3, le processus selon l'invention fait également intervenir une étape (60) de mémorisation, dans la mémoire (102) des seconds moyens d'acquisition (12), de données horodatées représentatives du type d'utilisation du produit (P) disposé dans la cellule(C). Dans un mode de réalisation de l'invention, une étape (66) d'association des séquences d'attachement/détachement avec le type d'utilisation du produit est réalisée par le module d'envoi. Ce dernier procède à la collecte et à l'association des séquences d'attachement/détachement des numéros/codes de terminaux (21, 22) déclarés avec des informations représentatives de l'utilisation du produit à un instant précis. Une étape (68) de transmission vers la base de données (51) du centre serveur (5) est alors réalisée par le module d'envoi (10) après une étape (67) intermédiaire de compression et codage des données à transmettre.

Dans le cas particulier d'un produit télévisuel dont le type d'utilisation dépend du choix d'un canal de diffusion, chaque modification de canal de diffusion entraîne une mise à jour de l'attachement des terminaux (21, 22), par l'intermédiaire d'une fonction logique de type HOLD utilisée par exemple pour chacun des spectateurs. Cette logique de type HOLD inclut par exemple une mise en attente d'une modification de programme. L'attachement peut être caractérisé par une information de type NEW qui inclut le type de programme sélectionné, le détachement par une information de type QUIT. Il est possible de qualifier la mise à jour, l'ajout ou le retrait d'un terminal (21, 22) par une fonction de type SET.

Dans un mode de réalisation de l'invention, les bases de données (51, 52) distinctes du centre serveur (5) peuvent former, avec une troisième base de données (53) de type Datamart servant de support à des applications d'aide à la décision et de gestion de la relation client, un ensemble répondant aux exigences de confidentialité et de protection de la vie privée.

Un des avantages de l'invention est de fournir une "historisation" des attachements/détachements des porteurs de terminaux, dont les informations nominatives et personnelles sont stockées dans une base de données distincte de la base d'informations recueillies, alors que la technologie Bluetooth est avant tout un élément de transport de la voix entre un maître et un ou plusieurs esclaves, l'authentification et l'attachement n'étant qu'une étape permettant de réaliser ce but.

Un autre des avantages de l'invention réside dans la détection en temps réel de l'arrivée ou du départ d'un ou plusieurs utilisateurs. Par rapport à des technologies de type IrDA (Infrared Device Association), WiFi (Wireless Fidelity), Home RF (Radio fréquences) pouvant être utilisées pour permettre la détection, la technologie Bluetooth est particulièrement moins coûteuse et surtout mieux sécurisée pour des applications sensibles.

L'invention permet notamment l'identification sécurisée et passive d'un cercle de famille face à un récepteur de programmes dans un des modes de réalisation. Le mode non déclaratif associé à la détection automatique de la présence des spectateurs puis la corrélation de cette information avec le programme vu est un élément capable d'apporter une plus grande précision dans les mesures médiamétriques.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Procédé d'acquisition de données par un récepteur radio utilisant la technologie Bluetooth, mis en oeuvre par un équipement (1) gestionnaire d'informations comprenant des premiers moyens d'acquisition (11) de données dotés d'un module radio Bluetooth (3) incluant ledit récepteur pour recevoir des données d'au moins un terminal (21, 22) sans fil Bluetooth dans une zone déterminée dite cellule (C) de réception, ledit procédé comprenant une étape préalable de déclaration dudit terminal au module radio Bluetooth (3) et
- dans la cellule (C), une étape d'activation par un utilisateur d'une interface utilisateur pour fournir un signal de démarrage d'un type d'utilisation d'un produit (P) accessible dans la cellule(C) de réception,
- une étape (60) de mémorisation, dans une mémoire (102) de seconds moyens d'acquisition (12) de données de l'équipement (1) gestionnaire d'informations, de données horodatées représentatives du type d'utilisation du produit (P), le type d'utilisation du produit (P) étant renseigné, pour chaque changement de type d'utilisation, par l'intermédiaire d'une interface de renseignement (1) associée aux seconds moyens d'acquisition (12) de données et apte à recevoir ledit signal de démarrage,
- à un moment variable du processus, une étape (63) de détection/attachement automatique d'un terminal (21) déclaré introduit dans la cellule de réception (C), par le module radio Bluetooth (3), et une étape consécutive de création d'une séquence d'attachement/détachement automatique associée à au moins une caractéristique d'identification dudit terminal (21) par un module (110) de recueil et classement des premiers moyens d'acquisition (11) de données, ladite caractéristique d'identification étant fournie une fois pour toutes lors de l'étape de déclaration du terminal (21), l'identification se faisant alors ensuite automatiquement toujours dans le mode non déclaratif,
- à un moment variable du processus, une étape (64) de fin de détection/détachement automatique d'un terminal (22) déclaré ayant quitté la cellule (C) de réception, par le module radio Bluetooth (3), et une étape consécutive (65) de mémorisation de la séquence d'attachement/détachement associée à la caractéristique d'identification dudit terminal (22) par ledit module (110) de recueil et classement, dans une mémoire (101) des premiers moyens d'acquisition (11) de données,
- une étape (68) de transmission vers une première base de données (51) d'un centre serveur (5), par un module d'envoi (10) de l'équipement (1) gestionnaire d'informations, de données représentatives d'un historique comprenant pour chaque terminal (21, 22) déclaré les séquences horodatées d'attachement/détachement complétées avec le type d'utilisation correspondant du produit (P) accessible dans la cellule (C) de réception.

2. Procédé selon la revendication 1, dans lequel l'étendue de la zone déterminée est de l'ordre de 10 mètres, le module radio Bluetooth (3) étant fixe et de classe 3 avec une puissance d'émission de l'ordre de 0 décibel.

3. Procédé selon la revendication 1 ou 2, dans lequel l'étape de déclaration comprend la saisie d'un code d'identification du terminal (21, 22) à l'aide d'une interface graphique et de moyens de navigation reliés à l'équipement (1) gestionnaire d'informations, l'étape (63) de détection/attachement étant visualisable par des moyens d'indication de détection du terminal (21, 22).

4. Procédé selon l'une quelconque des revendications 1 à 3, dans lequel une étape de mise à jour est réalisée lors d'une modification du type d'utilisation du produit (P), par l'intermédiaire d'un module de suivi (120) des seconds moyens d'acquisition (12), pour mettre à jour les séquences d'attachement/détachement en cours.

5. Procédé selon l'une quelconque des revendications 1 à 4, dans lequel chaque terminal (21, 22) est destiné à un utilisateur unique ayant saisi un code d'identification personnel lors de l'étape de déclaration, des données associées au terminal (21, 22) pour représenter des informations caractérisant cet utilisateur unique étant stockées dans une deuxième base de données (52) du centre serveur (5).

6. Procédé selon l'une quelconque des revendications 1 à 5, dans lequel les données à transmettre vers la première base de données (51) sont compressées puis codées par des moyens de transformation de données couplés au module d'envoi (10), pour être envoyées par le module d'envoi (10) vers la première base de données (51) via un réseau de communication public.

7. Procédé selon l'une quelconque des revendications 1 à 6, dans lequel la mémoire (101) des premiers moyens d'acquisition (11) de données, en cas de succès de réception par la première base de données (51) du centre serveur (5), est déchargée par des moyens d'effacement de données du module d'envoi (10), ce dernier réitérant l'étape (68) de transmission dans le cas contraire.

8. Procédé selon la revendication 7, dans lequel la mémoire (102) des seconds moyens d'acquisition (12) de données est également déchargée par lesdits moyens d'effacement de données en cas de succès de réception par la première base de données (51) du centre serveur (5).

9. Procédé selon l'une quelconque des revendications 6 à 8, dans lequel le réseau de communication public à travers lequel les données codées compressées sont transmises est le réseau Internet ou un réseau de type GSM.

10. Procédé selon l'une quelconque des revendication 1 à 9, dans lequel le produit (P) est télévisuel, le type d'utilisation étant représentatif d'une programmation dudit produit (P).

11. Equipement gestionnaire d'informations utilisant une technologie de type Bluetooth pour la mise en oeuvre du procédé selon l'une des revendications 1 à 10, comprenant des premiers moyens d'acquisition (11) de données dotés d'un module radio Bluetooth (3) incluant ledit récepteur pour recevoir des données d'au moins un terminal (21, 22) sans fil Bluetooth dans une zone déterminée dite cellule (C) de réception, ainsi qu'une interface utilisateur pour déclarer ledit terminal (21, 22) au module radio Bluetooth (3) avec au moins une caractéristique d'identification du terminal (21, 22),
- une interface utilisateur pour fournir un signal de démarrage d'un type d'utilisation d'un produit (P) accessible dans la cellule (C) de réception,
- des seconds moyens d'acquisition (12) de données pourvus d'une interface (I) de renseignement et d'une mémoire (102) pour stocker des données horodatées représentatives d'un type d'utilisation du produit (P)le type d'utilisation étant renseigné, pour chaque changement de type d'utilisation, par l'intermédiaire de l'interface de renseignement (1) qui reçoit ledit signal de démarrage,
- un module (110) de recueil et classement inclus dans les premiers moyens d'acquisition (11) de données et relié au module radio Bluetooth (3), apte d'une part à identifier un terminal (21, 22) déclaré venant d'être détecté par le module radio Bluetooth (3) pour créer automatiquement une séquence d'attachement/détachement associée à ladite caractéristique d'identification du terminal (21, 22), et d'autre part à identifier automatiquement la fin de détection de ce terminal (21, 22) pour mémoriser ladite séquence dans une mémoire (101) des premiers moyens d'acquisition (11) de données, ledit module de recueil et classement étant agencé pour mémoriser une caractéristique d'identification dudit terminal (21, 22) lors d'une déclaration préalable effectuée une fois pour toutes du terminal (21, 22) au module radio Bluetooth (3),
- un module d'envoi (10) de données apte à collecter les données obtenues par les premiers et seconds moyens d'acquisition (11, 12) de données et transmettre vers une base de données distante (51) des données représentatives d'un historique répertoriant pour chaque terminal (21, 22) déclaré les séquences horodatées d'attachement/détachement complétées avec le type d'utilisation correspondant du produit (P) accessible dans la cellule (C) de réception.

12. Equipement selon la revendication 11, dans lequel le module radio Bluetooth (3) est de classe 3 et comprend une antenne (30) à gain directive avec une puissance d'émission de l'ordre de 0 décibel.

13. Equipement selon la revendication 11 ou 12, dans lequel l'interface utilisateur comprend une interface graphique et des moyens de navigation pour permettre la saisie d'un code d'identification du terminal (21, 22).

14. Equipement selon l'une quelconque des revendications 11 à 13, dans lequel l'interface (I) de renseignement est reliée à un module de suivi (120) des seconds moyens d'acquisition (12) apte à réaliser la mise à jour des séquences d'attachement/détachement en cours en fonction du type d'utilisation du produit (P).

15. Equipement selon l'une quelconque des revendications 11 à 14, dans lequel le module d'envoi (10) de données est couplé à des moyens de transformation de données permettant de compresser et coder les données à transmettre, ledit module d'envoi (10) comprenant une interface de communication avec un réseau de communication public.

16. Equipement selon l'une quelconque des revendications 11 à 15, dans lequel le module d'envoi (10) comporte des moyens d'effacement de données pour décharger la mémoire des premiers et/ou seconds moyens d'acquisition (11, 12) de données et des moyens de réception pour vérifier la bonne réception de données par la base de données distante (51).

17. Equipement selon la revendication 15 ou 16, dans lequel l'interface de communication du module d'envoi est un terminal Internet ou de type GSM.

## Claims

1. Method of data acquisition by a radio receiver using Bluetooth technology, implemented by an information management system (1) comprising first data acquisition means (11) equipped with Bluetooth radio module (3) including the said receiver in order to receive data from at least one Bluetooth wireless terminal (21, 22) in a specified zone referred to as a receiving cell (C), the said method comprising a prior step of declaration of the said terminal to the Bluetooth radio module (3) and comprising:
- in the cell (C) a step of activation by a user of a user interface in order to supply a start signal of a type of use of a product, (P) which is, accessible in the receiving cell (C),
- a step (60) of storing, in a memory (102) of second data acquisition means (12) of the information management system (1), of time-stamped data representing the type of use of the product (P), the type of use of the product (P) being reported for each change of type of use by means of a reporting interface (I) associated with the second data acquisition means (12) and capable of receiving the said start signal,
- at a variable moment in the process a step (63) of automatic detection/attachment of a declared terminal (21) introduced into the receiving cell (C) by the Bluetooth radio module (3), and a consecutive step of creating an automatic attachment/detachment sequence associated with at least one identification characteristic of the said terminal (21) by a collection and sorting module (110) of the first data acquisition means (11), the said identification characteristic being supplied once and for all during the step of declaration of the terminal (21), the identification then being made automatically always in the non-declarative mode,
- at a variable moment in the process a step (64) of ending automatic detection/detachment of a declared terminal (22) which has left the receiving cell (C), by the Bluetooth radio module (3), and a consecutive step (65) of storing the attachment/detachment sequence associated with the identification characteristic of the said terminal (22) by the said collection and sorting module (110), in a memory (101) of the first data acquisition,means (11),
- a step (68) of transmission to a first database (51) of a server centre (5), by a transmission module (10) of the information management system (1), of data representing a history comprising for each declared terminal (21, 22) the date-stamped attachment/detachment sequences completed with the corresponding type of use of the product (P) which is accessible in the receiving cell (C).

2. Method as claimed in Claim 1, in which the extent of the specified zone is of the order of 10 metres, the Bluetooth radio module (3) being fixed and in class 3 with a transmitting power of the order of 0 decibels.

3. Method as claimed in Claim 1 or 2, in which the step of declaration comprises the capture of an identification code of the terminal (21, 22) with the aid of a graphics interface and navigation means connected to the information management system (1), the step (63) of detection/attachment being capable of being displayed by means for indicating detection of the terminal (21, 22).

4. Method as claimed in any one of Claims 1 to 3, in which a step of updating is carried out during a modification of the type of use of the product (P), by means of a monitoring module (120) of the second acquisition means (12), in order to update the current attachment/detachment sequences.

5. Method as claimed in any one of Claims 1 to 4, in which each terminal (21, 22) is intended for a single user who has captured a personal identification code during the declaration step, data associated with the terminal (21, 22) in order to represent information which characterises this single user being stored in a second database (52) of the server centre (5).

6. Method as claimed in any one of Claims 1 to 5, in which the data to be transmitted to the first database (51) are compressed then encoded by data transformation means linked to the transmission module (10) in order to be transmitted by the transmission module (10) to the first database (51) via a public communication network.

7. Method as claimed in any one of Claims 1 to 6, in which the memory (101) of the first data acquisition means (11), in the event of successful reception by the first database (51) of the server centre (5), is unloaded by data deletion means of the transmission module (10), this latter reiterating the step (68) of transmission in the converse case.

8. Method as claimed in Claim 7, in which the memory (102) of the second data acquisition means (12) is also unloaded by the said data deletion means in the event of successful reception by the first database (51) of the server centre (5).

9. Method as claimed in any one of Claims 6 to 8, in which the public communication network through which the compressed encoded data are transmitted is the Internet or a GSM-type network.

10. Method as claimed in any one of Claims 1 to 9, in which the product (P) is a television product, the type of use being representative of programming of the said product (P).

11. Information management system using a Bluetooth-type technology for implementing the method as claimed in any one of Claims 1 to 10, comprising first data acquisition means (11) equipped with a Bluetooth radio module (3) including the said receiver in order to receive data from at least one Bluetooth wireless terminal (21, 22) in a specified zone referred to as a receiving cell (C), as well as a user interface to declare the said terminal (21, 22) to the Bluetooth radio module (3) with at least one identification characteristic of the terminal (21, 22), comprising:
- a user interface to supply a start signal of a type of use of a product (P) which is accessible in the receiving cell (C),
- second data acquisition mans (12) provided with a reporting interface (I) and a memory (10) in order to store time-stamped data representing a type of use of the product (P), the type of use being reported for each change type of use by means of the reporting interface (I) which receives the said start signal,
- a collection and sorting module (110) included in the first data acquisition means (11) and connected to the Bluetooth radio module (3), capable on the one hand of identifying a declared terminal (21, 22) which has just been detected by the Bluetooth radio module (3) in order to automatically create an attachment/detachment sequence associated with the said identification characteristic of the terminal (21, 22), and on the other hand in order to identify automatically the end of detection of this terminal (21, 22) in order to memorise the said sequence in a memory (101) of the first data acquisition means (11), the said collection and sorting module being provided in order to memorise an identification characteristic of the said terminal (21, 22) during a prior declaration, effected once and for all, of the terminal (21, 22) to the Bluetooth radio module (3),
- a data transmission module (10) capable of collecting the data obtained by the first and second data acquisition means (11, 12) and transmitting to a remote database (51) data representing a history which documents for each declared terminal (21, 22) the completed time-stamped attachment/detachment sequences with the corresponding type of use of the product (P) which is accessible in the receiving cell (C).

12. System as claimed in Claim 11, in which the Bluetooth radio module (3) is in Class 3 and comprises a directive gain antenna (30) with a transmitting power of the order of 0 decibels.

13. System as claimed in Claim 11 or 12, in which the user interface comprises a graphics interface and navigation means in order to enable the capture of an identification code of the terminal (21, 22).

14. System as claimed in any one of Claims 11 to 13, in which the reporting interface (I) is connected to a monitoring module (120) of the second acquisition means (12) capable of achieving updating of the current attachment/detachment sequences as a function of the type of use of the product (P).

15. System as claimed in any one of Claims 11 to 14, in which the data transmission module (10) is coupled to data transformation means which make it possible to compress and encode the data to be transmitted, the said transmission module (10) comprising an interface for communication with a public communication network.

16. System as claimed in any one of Claims 11 to 15, in which the transmission module (10) includes data deletion means in order to unload the memory of the first and/or second data acquisition means (11, 12) and receiving means in order to verify good reception of data by the remote database (51).

17. System as claimed in Claim 15 or 16, in which the communication interface of the transmission module is an Internet terminal or a GSM-type terminal.

## Patentansprüche

1. Verfahren zur Erfassung von Daten durch einen die Bluetooth-Technik verwendenden Funkempfänger, ausgeführt durch eine Informationsverarbeitungseinrichtung (1), die erste Datenerfassungsmittel (11) umfasst, die mit einem Bluetooth-Funkmodul (3) versehen sind, das den genannten Empfänger enthält, um Daten von mindestens einem drahtlosen Bluetooth-Endgerät (21, 22) in einem festgelegten Bereich, Empfangszelle (C) genannt, zu empfangen, wobei das genannte Verfahren zunächst einen Schritt der Anmeldung des genannte Endgerätes beim Bluetooth-Funkmodul (3) enthält, und umfassend:
- in der Zelle (C) einen Schritt der Aktivierung einer Benutzerschnittstelle durch einen Benutzer, um ein Signal des Einschaltens einer Nutzungsart eines Produktes (P) zu liefern, das in der Empfangszelle (C) zur Verfügung steht,
- einen Schritt (60) der Speicherung in einem Speicher (102) zweiter Datenerfassungsmittel (12) der Informationsverarbeitungseinrichtung (1) von zeitmarkierten Daten, die die Nutzungsart des Produktes (P) angeben, wobei die Nutzungsart des Produktes (P) bei jedem Wechsel der Nutzungsart über eine Meldungsschnittstelle (1) gemeldet wird, die den zweiten Datenerfassungsmitteln (12) angehört und in der Lage ist, das genannte Einschaltsignal zu empfangen,
- zu einem veränderlichen Zeitpunkt des Verfahrens einen Schritt (63) der Feststellung/automatischen Zuordnung eines angemeldeten Endgerätes (21), das in die Empfangszelle (C) hineingebracht wurde, durch das Bluetooth-Funkmodul (3) und einen folgenden Schritt der Erzeugung einer automatischen Zuordnungs-/Entlassungs-Sequenz, die mindestens einem Identifizierungsmerkmal des genannten Endgerätes (21) zugeordnet ist, durch ein Sammlungs- und Klassifizierungs-Modul (110) der ersten Datenerfassungsmittel (11), wobei das genannte Identifizierungsmerkmal ein- für allemal im Schritt der Anmeldung des Endgerätes (21) vorgebracht wurde, wobei die Identifizierung dann in der Folge automatisch immer im anmeldungsfreien Modus erfolgt,
- zu einem veränderlichen Zeitpunkt des Verfahrens einen Schritt (64) des Endes der Feststellung/automatischen Entlassung eines angemeldeten Endgerätes (22), das die Empfangszelle (C) verlassen hat, durch das Bluetooth-Funkmodul (3) und einen folgenden Schritt der Speicherung der Zuordnungs-/Entlassungs-Sequenz, die dem ldentifizierungsmerkmal des genannten Endgerätes (22) zugeordnet ist, durch das genannte Sammlungs- und Klassifizierungs-Modul (110) in einem Speicher (101) der ersten Datenerfassungsmittel (11),
- einen Schritt (68) der Übermittlung von Daten an eine erste Datenbank (51) einer Server-Zentrale (5) durch ein Übertragungsmodul (10) der Informationsverarbeitungseinrichtung (1), die einen Bericht darstellen, der für jedes angemeldete Endgerät (21, 22) die zeitmarkierten Zuordnungs-/Entlassungssequenzen, vervollständigt durch die entsprechende Nutzungsart des Produktes (P), das in der Empfangszelle (C) zur Verfügung steht, enthält.

2. Verfahren nach Patentanspruch 1, in dem die Größe des festgelegten Bereichs in der Größenordnung von 10 Metern liegt, wobei das Bluetooth-Funkmodul (3) feststeht und mit einer Sendeleistung in der Größenordnung von 0 Dezibel der Klasse 3 angehört.

3. Verfahren nach Patentanspruch 1 oder 2, in dem der Anmeldungsschritt die Eingabe eines Identifizierungscodes des Endgerätes (21, 22) mit Hilfe einer graphischen Schnittstelle und von Auswahlmitteln umfasst, die mit der Informationsverarbeitungseinrichtung (1) verbunden sind, wobei der Schritt (63) der Feststellung/Zuordnung durch Mittel zur Angabe der Feststellung des Endgerätes (21, 22) darstellbar ist.

4. Verfahren nach irgendeinem der Patentansprüche 1 bis 3, in dem ein Aktualisierungsschritt bei einer Änderung der Nutzungsart des Produktes (P) mit Hilfe eines Folgemoduls (120) der zweiten Erfassungsmittel (12) ausgeführt wird, um die laufenden Zuordnungs-/Entlassungssequenzen zu aktualisieren.

5. Verfahren nach irgendeinem der Patentansprüche 1 bis 4, in dem jedes Endgerät (21, 22) für einen einzelne Benutzer bestimmt ist, der im Anmeldungsschritt einen persönichen Identifizierungscode eingegeben hat, wobei dem Endgerät (21, 22) zugeordnete Daten Informationen bezeichnen, die diesen einzelnen Benutzer charakterisieren, in einer zweiten Datenbank (52) der Server-Zentrale (5) gespeichert sind.

6. Verfahren nach irgendeinem der Patentansprüche 1 bis 5, in dem die der ersten Datenbank (51) zu übermittelnden Daten durch Datenumwandlungsmittel komprimiert und dann verschlüsselt werden, die mit dem Übertragungsmodul (10) gekoppelt sind, um über ein öffentliches Fernmeldenetz vom Übertragungsmodul (10) zur ersten Datenbank (51) übermittelt zu werden.

7. Verfahren nach irgendeinem der Patentansprüche 1 bis 6, in dem der Speicher (101) der ersten Datenerfassungsmittel (11) im Fall des erfolgreichen Empfanges durch die erste Datenbank (51) der Server-Zentrale (5) durch Datenlöschmittel des Übertragungsmoduls (10) entlastet wird, während dieses letztgenannte im entgegengesetzten Fall den Übermittlungsschritt (68) wiederholt.

8. Verfahren nach Patentanspruch 7, in dem der Speicher (102) der zweiten Datenerfassungsmittel (12) im Fall des erfolgreichen Empfanges durch die erste Datenbank (51) der Server-Zentrale (5) ebenfalls durch die genannten Datenlöschmittel entlastet wird.

9. Verfahren nach irgendeinem der Patentansprüche 6 bis 8, in dem das öffentliche Fernmeldenetz, über das die komprimierten codierten Daten übertragen werden, das Internet ist oder ein Netz vom Typ GSM.

10. Verfahren nach irgendeinem der Patentansprüche 1 bis 9, in dem das Produkt (P) Fernsehen ist, wobei die Nutzungsart einem Programm des genannten Produktes (P) entspricht.

11. Informationsverarbeitungseinrichtung die eine Technik vom Typ Bluetooth zur Ausführung des Verfahrens nach einem der Patentansprüche 1 bis 10 verwendet, die erste Datenerfassungsmittel (11) umfasst, die mit einem Bluetooth-Funkmodul (3) versehen sind, das den genannten Empfänger enthält, um Daten von mindestens einem drahtlosen Bluetooth-Endgerät (21 , 22) in einem festgelegten Bereich, Empfangszelle (C) genannt, zu empfangen, sowie eine Benutzer-Schnittstelle, um das genannte Endgerät (21, 22) beim Bluetooth-Funkmodul (3) mit mindestens einem ldentifizierungsmerkmal des Endgerätes (21, 22) anzumelden, umfassend:
- eine Benutzerschnittstelle, um ein Signal des Einschaltens einer Nutzungsart eines Produktes (P) zu liefern, das in der Empfangszelle (C) zur Verfügung steht,
- zweite Datenerfassungsmittel (12) mit einer Meldungsschnittstelle (1) und einem Speicher (102) zum Speichern von zeitmarkierten Daten, die eine Nutzungsart des Produktes (P) angeben, wobei die Nutzungsart des Produktes (P) bei jedem Wechsel der Nutzungsart über die Meldungsschnittstelle (1) gemeldet wird, die das genannte Einschaltsignal empfängt,
- ein Sammlungs- und Klassifizierungs-Modul (110) in den ersten Datenerfassungsmitteln (11), das mit dem Bluetooth-Funkmodul (3) verbunden ist, das einerseits in der Lage ist, ein angemeldetes Endgerät (21, 22) zu identifizieren, das soeben vom Bluetooth-Funkmodul (3) festgestellt wurde, um automatisch eine Zuordnungs-/Entlassungs-Sequenz, die dem genannten Identifizierungsmerkmal des genannten Endgerätes (21, 22) zugeordnet ist, zu erzeugen und andererseits automatisch das Ende der Feststellung dieses Endgerätes (21, 22) zu identifizieren, um die genannte Sequenz in einem Speicher (101) der ersten Datenerfassungsmittel (11) zu speichern, wobei das genannte Sammlungs- und Klassifizierungs-Modul dafür eingerichtet ist, ein Identifizierungsmerkmal des genannten Endgerätes (21, 22) bei einer vorab erfolgten Anmeldung zu speichern, die ein- für allemal vom Endgerät (21, 22) beim Bluetooth-Funkmodul (3) erfolgt ist,
- ein Modul (10) zur Übermittlung von Daten, das geeignet ist, die von den ersten und zweiten Erfassungsmitteln (11, 12) erhaltenen Daten zu sammeln und an eine ferne Datenbank (51) Daten zu übermitteln, die einen Bericht darstellen, der für jedes angemeldete Endgerät (21, 22) die zeitmarkierten Zuordnungs-/ Entlassungssequenzen, vervollständigt durch die entsprechende Nutzungsart des Produktes (P), das in der Empfangszelle (C) zur Verfügung steht, angibt.

12. Einrichtung nach Patentanspruch 11, in der das Bluetooth-Funkmodul (3) der Klasse 3 angehört und eine Antenne (30) mit Richtungsmaß mit einer Sendeleistung in der Größenordnung von 0 Dezibel aufweist.

13. Einrichtung nach Patentanspruch 11 oder 12, in der die Benutzerschnittstelle eine graphische Schnittstelle umfasst und Auswahlmittel, um die Eingabe eines Identifizierungscodes des Endgerätes (21, 22) zu ermöglichen.

14. Einrichtung nach irgendeinem der Patentansprüche 11 bis 13, in der die Meldungsschnittstelle mit einem Folgemodul (120) der zweiten Erfassungsmittel (12) verbunden ist, das in der Lage ist, die Aktualisierung der laufenden Zuordnungs-/Entlassungssequenzen in Abhängigkeit von der Nutzungsart des Produktes (P) auszuführen.

15. Einrichtung nach irgendeinem der Patentansprüche 11 bis 14, in der das Datenübertragungsmodul (10) mit Datenumwandlungsmitteln gekoppelt ist, d ie erlauben, die zu übertragenden Daten zu komprimieren und zu codieren, wobei das genannte Übertragungsmodul (10) eine Schnittstelle zur Kommunikation mit einem öffentlichen Fernmeldenetz umfasst.

16. Einrichtung nach irgendeinem der Patentansprüche 11 bis 15, in der das Übertragungsmodul (10) Datenlöschmittel zur Entlastung des Speichers der ersten und/oder zweiten Datenerfassungsmittel (11, 12) enthält und Empfangsmittel, um den guten Empfang von Daten durch die ferne Datenbank (51) zu prüfen.

17. Einrichtung nach Patentanspruch 15 oder 16, in der die Kommunikationsschnittstelle des Übertragungsmoduls eine Internet- oder GSM-Endeinrichtung ist.
